# EUROPEAN PATENT APPLICATION

(11) **EP 1 816 730 A1**
(43) Date of publication of application: **08.08.2007**
(21) Application number: 05809460.8
(22) Date of filing: 21.11.2005
(51) Int. Cl.: H02K 15/03, C23C 28/00, C23C 28/02, C25D 5/12, C25D 5/48, C25D 7/00, H01F 1/053

(54) **PROCESS FOR PRODUCING PERMANENT MAGNET FOR USE IN AUTOMOTIVE IPM MOTOR**

(30) Priority: 25.11.2004 JP 2004341118
(71) Applicant: HONDA MOTOR CO., Ltd., Tokyo 107-8556 (JP); Neomax Co., Ltd., Osaka-shi, Osaka 541-0041 (JP)
(72) Inventor: KOMATSU, Toshiyasu, c/o HONDA R & D CO., LTD., Wako-shi, Saitama 3510193 (JP); SHINTANI, Yasutaka, c/o HONDA R & D CO., LTD., Wako-shi, Saitama 3510193 (JP); TAKAHASHI, Kazunari, c/o HONDA R & D CO., LTD., Wako-shi, Saitama 3510193 (JP); KABASAWA, Akira, c/o HONDA R & D CO., LTD., Wako-shi, Saitama 3510193 (JP); OKADA, Hidenori, c/o HONDA R & D CO., LTD., Wako-shi, Saitama 3510193 (JP); MIYAO, Yukimitsu, c/o NEOMAX Co., Ltd., Kumagaya-shi, Saitama; 3608577 (JP); KANEKO, Yuji, c/o NEOMAX KINKI Co., Ltd., Hyogo; 6670111 (JP)
(74) Representative: Thun, Clemens
(86) International application number: PCT/JP2005/021357
(87) International publication number: WO 2006/057216

(57) **Abstract**

[Problem] To provide a process for producing a permanent magnet for use in an automotive IPM motor, which excels in all of corrosion resistance, abrasion resistance, and impact resistance.

[Means for Resolution] The production process **characterized in that** it comprises forming on the surface of an R-Fe-B based permanent magnet a 3 to 15 µm thick Ni film as a first layer by electroplating method, followed by a 3 to 15 µm thick Cu or Sn film as a second layer by electroplating method, and a 4 to 7 µm thick Ni-P alloy film as a third layer by electroless plating method, provided that the third layer has a Vicker's hardness of 2.5 to 4.5 with respect to the Vicker's hardness of the Cu or Sn electroplated film provided as the second layer taken as 1.

## Description

### Technical Field

The present invention relates to a process for producing a permanent magnet which is used by inserting it into the slot inside a rotor yoke of an automotive IPM motor.

### Background Art

To improve the motor performance, an electric vehicle or a hybrid vehicle utilizes in a motor assembled therein an R-Fe-B based permanent magnet (where R represents a rare earth element), which possesses the highest magnetic characteristics among the permanent magnet materials. The R-Fe-B based permanent magnet contains a highly reactive R, and is thereby apt to be oxidized and corroded in air. Accordingly, to assure corrosion resistance on using an R-Fe-B based permanent magnet, some kind of surface treatment is applied, such as forming on the surface thereof a Ni plating film, an Al vapor deposition film, a resin coating film, and the like.
Numerous methods have been proposed for further improving corrosion resistance of an R-Fe-B based permanent magnet, and not a few patent applications have been filed. For instance, to obtain an R-Fe-B based permanent magnet which excels in corrosion resistance, Patent reference 1 discloses forming on the surface of the magnet, a Ni film as a first protective layer, a Cu or an Sn film that is softer than the first protective layer as a second protective layer, and a Ni film that is harder than the second protective layer as a third protective layer. Patent references 2 to 4 also disclose laminated films, which are combinations of Ni film - Cu film - Ni or Ni-P film, provided for the purpose of improving corrosion resistance. Patent reference 5 discloses a laminated film provided for the purpose of improving corrosion resistance and assuring abrasion resistance, which is a combination of a matte Ni film low in hardness and a bright Ni film high in hardness. Furthermore, Patent reference 6 discloses improving the abrasion resistance of an iron-based sintered material by forming a Ni-P film having a Vicker's hardness value of about 400 to 500 on the surface of the iron-based sintered material.
Patent reference 1: JP-A-1-321610
Patent reference 2: JP-A-5-205926
Patent reference 3: JP-B-3377605
Patent reference 4: JP-A-7-331486
Patent reference 5: JP-A-9-7810
Patent reference 6: JP-A-2003-97429

### Disclosure of the Invention

### Problems the Invention is to Solve

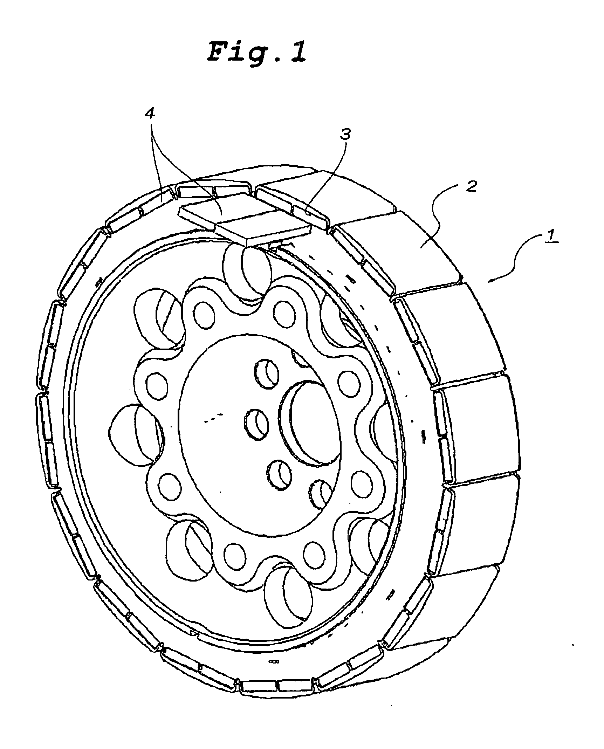

With improving performance of electric vehicles and hybrid vehicles, higher performance is also demanded for the motors assembled therein. As a result, SPM (Surface Permanent Magnet: Surface magnet) motors are being replaced by IPM (Interior Permanent Magnet: Interior magnet) motors. IPM motors are being assembled, for example, by using a rotor 1 shown in Fig. 1, and the-structure of the rotor 1 is such that a magnet 4 is inserted into a slot 3 provided inside a yoke 2 constructed by laminating silicon steel sheets. Since the yokes are constructed by laminating punched out silicon steel sheets, the surface of the slots has burrs, punching blade marks, and other irregularities : Thus, in case of inserting an R-Fe-B based permanent magnet having formed on the surface thereof a corrosion resistant film into a slot, there sometimes happened that the irregularities cause damages on the film; as a result, this induced problems on corrosion resistance of the magnet as to deteriorate the magnetic characteristics, which caused a problem of low motor performance. Furthermore, because the clearance between the slot interior and the magnet was so small, there was a problem of generating fractures or chippings of the film on inserting the magnet, due to the large stress generated on the magnet. Moreover, since an IPM motor rotates at 6000 rpm or higher revolution rate, strong centrifugal force, in addition to the large magnetic suction force, acts on the magnet inside the slot at the time of rotating the motor. Thus, the magnet inside the slot moves in the direction of the diameter and collides with the yoke; this led to a problem of causing scratching or abrasive damage on the film, or generating fractures or chippings of the film.
In the light of the aforementioned problems, a surface treatment method for an R-Fe-B based permanent magnet for use in an automotive IPM-motor should impart, in addition to corrosion resistance (resistant to the easy formation of scratches), abrasion resistance (resistant to easy abrasion) and impact resistance (resistant to the easy formation of fractures or chippings).
However, such a method involves conflicting problems; in case the hardness of the film formed on the surface of the magnet is increased to assure abrasion resistance, impact resistance of the film tends to lower as to make the film susceptible to fractures or chippings; on the other hand, in case the film is made flexible to assure impact resistance, abrasion resistance of the film tends to deteriorate as to make the film liable to scratches and abrasion. Accordingly, the aforementioned problems cannot be solved by simply applying the known surface treatment methods as described in Patent references 1 to 6 above as a surface treatment method for the magnet for use in an IPM motor. Although Patent references 1 to 5 disclose various types of laminated film, their objectives are to improve corrosion resistance, and no description or suggestion can be found therein from the viewpoint of simultaneously imparting abrasion resistance and impact resistance to a magnet for use under a particular environment, such as a magnet for use in an automotive IPM motor. Furthermore, abrasion resistance and impact resistance cannot be assured by simply forming a hard film at the outermost layer as described in Patent-reference 6.
Accordingly, an object of the present invention is to provide a process for producing a permanent magnet for use in an automotive IPM motor, which excels in all of corrosion resistance, abrasion resistance, and impact resistance.

### Means for Solving the Problems

In the light of the aforementioned problems, the present inventors have studied extensively, and as a result, they have found that the problems can be solved by laminating, on the surface of an R-Fe-B based permanent magnet having provided thereon a Ni electroplated film at a predetermined film thickness as a base layer, a Cu or Sn electroplated film which functions as an impact buffer material at a predetermined film thickness, and forming at the outermost layer a Ni-P alloy electroless plating film at predetermined hardness and film thickness.

The present invention has been accomplished based on the findings above, and the process for producing a permanent magnet which is used by inserting it into the slot inside a rotor yoke of an automotive IPM motor is characterized by, as described in claim 1, a production process comprising forming on the surface of an R-Fe-B based permanent magnet a 3 to 15 µm thick Ni film as a first layer by electroplating method, followed by a 3 to 15 µm thick Cu or Sn film as a second layer by electroplating method, and a 4 to 7 µm thick Ni-P alloy film as a third layer by electroless plating method, provided that the third layer has a Vicker's hardness of 2.5 to 4.5 with respect to the Vicker's hardness of the Cu or Sn electroplated film provided as the second layer taken as 1.
The production process described in claim 2 is characterized in that it is the production process as claimed in claim 1, wherein the film provided as the first layer is formed by using a Ni-plating bath, the pH of which is adjusted to a range of 6.0 to 8.0.
Further, the production process described in claim 3 is characterized in that it is the production process as claimed in claim or 2, wherein the Vicker's hardness value of the film provided as the third layer is in a range of 400 to 700.
Furthermore, the production process described in claim 4 is characterized in that it is the production process as claimed in one of claims 1 to 3, wherein the film provided as the third layer contains 5 to 12 % by weight of P.
Moreover, the production process described in claim 5 is characterized in that it is the production process as claimed in one of claims 1 to 4, wherein the total film thickness of the films provided as the first layer to the third layer is in a range of 15 to 25 µm.
In addition, the-permanent magnet which is used by inserting it into the slot inside a rotor yoke of an automotive IPM motor according to the present invention is characterized by, as described in claim 6, laminating a 3 to 15 µm thick Cu or Sn electroplated film on the surface of an R-Fe-B based permanent magnet with a 3 to 15 µm thick Ni electroplated film interposed, and a 4 to 7 µm thick Ni-P alloy electroless plating film having a Vicker's hardness of 2.5 to 4.5 with respect to the Vicker's hardness of the Cu or Sn electroplated film taken as 1.

### Effect of the Invention

According to the present invention, a laminated film having the function as an impact buffer material and an extremely high hardness with improved sliding properties is formed on the surface of an R-Fe-B based permanent magnet; accordingly, in case it is used by inserting it into the slot inside a rotor yoke of an automotive IPM motor, the film is effectively protected from scratches, abrasion, or causing fractures or chippings, thereby imparting excellent corrosion resistance, abrasion resistance, and impact resistance to the magnet.

### Brief Description of the Drawings

[Figure 1]
   It is an oblique view of an example of a rotor for use in an IMP motor.

### Explanation of Symbols

- 1: Rotor
- 2: Yoke
- 3: Slot
- 4: Magnet

### Best Mode for Carrying Out the Invention

The process for producing a permanent magnet which is used by inserting it into the slot inside a rotor yoke of an automotive IPM motor according to the present invention is characterized by that it comprises forming on the surface of an R-Fe-B based permanent magnet a 3 to 15 µm thick Ni film as a first layer by electroplating method, followed by a 3 to 15 µm thick Cu or Sn film as a second layer by electroplating method, and a 4 to 7 µm thick Ni-P alloy film as a third layer by electroless plating method, provided that the third layer has a Vicker's hardness of 2.5 to 4.5 with respect to the Vicker's hardness of the Cu or Sn electroplated film provided as the second layer taken as 1.

The Ni electroplated film provided as the first layer can be formed by using a bath well known in the art, such as a Watt-type bath, a sulfamate bath, and the like, but particularly preferred from the viewpoint of the film adhesiveness to the R-Fe-B based permanent magnet or of minimizing the eluting out of the magnet component from the surface of the magnet is to use, for example, the Ni plating bath (neutral Ni plating bath) whose pH is adjusted to a range of 6 to 8, as described in JP-B-2908637. As the plating bath composition for constituting the neutral Ni plating bath, there can be mentioned a composition containing, for example, 70 to 200 g/L of nickel sulfate, 25 to 150 g/L of ammonium citrate and/or sodium citrate, 10 to 30 g/L of boric acid, 5 to 50 g/L of ammonium chloride and/or sodium sulfate and 3 to 15 g/L of a stress reducing agent, with the pH adjusted to a range of 6.0 to 8.0. The bath temperature may be set in a range of 40 to 60°C.

The film thickness of the Ni electroplated film provided as the first layer is confined to a range of 3 to 15 µm. This is because if the film thickness should be less than 3 µm, it is feared to being unable to achieve the effect of improving adhesiveness to the upper layer plating film as a base layer; if the film thickness-should exceed 15 µm, there is risk of increasing the cost or reducing the effective volume of the magnet.

The Cu or Sn electroplated film provided as the second layer functions as an impact buffer material. The Cu electroplated film may be formed, for example, by using a bath well known in the art, such as a copper pyrophosphate plating bath and the like. As the plating bath composition for constituting the copper pyrophosphate plating bath, there can be mentioned a composition containing, for example, 20 to 105 g/L of copper pyrophosphate, 100 to 370 g/L of potassium pyrophosphate, 2 to 5 mL/L of ammonia water and an appropriate amount of a brightening agent, with the pH adjusted to a range of 8.0 to 9.0. The bath temperature may be set in a range of 50 to 60°C. The Sn electroplated film may be formed, for example, by using a bath well known in the art, such as an acidic tin plating bath and the like. As the plating bath composition for constituting the acidic tin plating bath, there can be mentioned a composition containing, for example, 30 to 50 g/L of stannous sulfate, 80 to 200 g/L of sulfuric acid and an appropriate amount of a brightening agent, with the pH adjusted to a range of 0.1 to 2.0. The bath temperature may be set in a range of 10 to 30°C.

The film thickness of the Cu or Sn electroplated.film provided as the second layer is confined to a range of 3 to 15 µm. This is because if the film thickness should be less than 3 µm, it is feared that the function as an impact buffer material cannot be realized; if the film thickness should exceed 15 µm, there is risk of increasing the cost or reducing the effective volume of the magnet. Preferred film thickness of the Cu or Sn electroplated film provided as the second layer is in a range of 7 to 15 µm.

The Ni-P alloy electroless plating film provided as the third layer may be formed, for example, by using a known acidic bath or an alkaline bath containing Ni ions and hypophosphates as its main components. As a preferred plating bath composition, there can be mentioned a composition containing, for example, 15 to 40 g/L of nickel sulfate, 20 to 40 g/L of sodium hypophosphate and appropriate amounts of a stabilizing agent, a complexing agent and the like, with the pH adjusted to a range of 4.0 to 5.0. The bath temperature may be set in a range of 80 to 95°C.

The Vicker's hardness of the Ni-P alloy electroless plating film provided as the third layer is specified in a range of 2.5 to 4.5 with respect to the Vicker's hardness of the Cu or Sn electroplated film provided as the second layer taken as 1. This is because if it should be lower than 2.5, the hardness is too low that the film is at the risks of generating scratches when the magnet is inserted into the slot, thereby causing negative influence on corrosion resistance of the magnet, or of undergoing excessive abrasion; if it should exceed 4.5, the hardness becomes excessively high as to apply non-negligible stress between the Cu or Sn electroplated film provided as the second layer, thereby generating fractures or chippings of the film. Preferred Vicker's hardness of the Ni-P alloy electroless plating film provided as the third layer is in a range of 3.0 to 4.0 with respect to the Vicker's hardness of the Cu or Sn electroplated film provided as the second layer taken as 1. In case the Cu or Sn electroplated film provided as the second layer is formed by using the plating bath as above, its Vicker's hardness is in a range of 100 to 200. Thus, in this case, the Vicker's hardness of the Ni-P alloy electroless plating film provided as the third layer is preferably in a range of 400 to 700. A Ni-P alloy electroless plating film with such a Vicker's hardness can be obtained by forming a film containing 5 to 12 % by weight of P. The P content of the film can be adjusted by controlling the P concentration of the plating bath.

The film thickness of the Ni-P alloy electroless plating film provided as the third layer is confined to a range of 4 to 7 µm. This is because if the film thickness should be less than 4 µm, it is feared that the function as the film provided as the third layer cannot be realized; if the film thickness should exceed 7 µm, there is risk of increasing the cost or reducing the effective volume of the magnet. Preferred film thickness of the Ni-P alloy electroless plating film provided as the third layer is in a range of 5 to 7 µm.

In addition, preferred total film thickness of the films provided as the first layer to the third layer is in a range of 15 to 25 µm.

### Examples

The present invention is explained in further detail below by way of examples and comparative examples; however, the present invention is not limited thereto. Furthermore, the examples and the comparative examples were carried out by using planar sintered magnets of 40.45 mm in length, 18.5 mm in width, and 4.5 mm in height, having a composition of 14Nd-79Fe-6B-1Co (at%) (which are referred to hereinafter as "magnet test pieces"), which were prepared according to a process described in, for example, US Patent No. 4770723 and US Patent No. 4792368; i.e., by pulverizing a known cast ingot and then subjecting the resulting powder to a pressing, a sintering, a heat treatment and a surface working.

### A. Process for producing Samples 1 to 5 (Examples)

### (Process step 1)

After placing 200 magnet test pieces and 6.0 mm diameter steel balls having an apparent volume of 1.5 L into a heat-resistant plastic barrel jig having a cross section of equilateral hexagon with 450 mm sides and 160 mm in length, the barrel jig was immersed in a pickling solution containing 0.2 mol/L of sodium nitrate and 1.5 % by volume of sulfuric acid at a liquid temperature of 30 °C, and was rotated for pickling at a revolution rate of 4 rpm for 4 minutes. Immediately thereafter, the magnet test pieces were subjected to ultrasonic rinsing using purified water (25°C) for 30 seconds, and were rapidly transferred to the film forming step to form a Ni electroplated film provided as a first layer on the surface thereof. The film forming step was carried out by using a plating bath containing 130 g/L of nickel sulfate hexahydrate, 30 g/L of ammonium citrate, 15 g/L of boric acid, 8 g /L of ammonium chloride and 8 g/L of saccharin, with the pH adjusted to 6.5 by using ammonia water, at a liquid temperature of 50 °C, while applying current at a current density of 0.25 A/dm² and rotating the barrel at a revolution rate of 4 rpm. After forming the film, the magnet test pieces having formed on the surface thereof a Ni electroplated film was thoroughly rinsed by immersing the barrel in purified water (25°C).

### (Process step 2)

Subsequently, a plating bath containing 25 g/L of copper pyrophosphate, 110 g/L of potassium pyrophosphate, 3 mL/L of ammonia water and an appropriate amount of a brightening agent, with the pH adjusted to 8.5 by using ammonia water was used at a liquid temperature of 50°C, to form a Cu electroplated film provided as a second layer on the surface of the Ni electroplated film provided as the first layer, while rotating the barrel at a revolution rate of 4 rpm and applying current at a current density of 0.23 A/dm². After forming the film, the magnet test pieces having formed on the surface thereof a laminated electroplated film was thoroughly rinsed by immersing the barrel in purified water (25°C).

### (Process step 3)

Then, as a Ni-P alloy electroless plating bath, a plating bath containing 27 g/L of nickel sulfate hexahydrate, 30 g/L of sodium hypophosphate and appropriate amounts of a stabilizing agent, a complexing agent and the like, with the pH adjusted to 4.0 by using ammonia water or sulfuric acid was used at a liquid temperature of 90°C. Thus, by carrying out the process by rotating the barrel at a revolution rate of 4 rpm, a Ni-P alloy electroless plating film provided as a third layer was formed on the surface of the Cu electroplated film provided as the second layer. Thereafter, the magnet test pieces having formed on the surface thereof a three-layered laminated film was thoroughly rinsed by immersing the barrel in purified water (25°C). Then, the magnet test pieces were taken out from the barrel jig, subjected to ultrasonic rinsing using purified water (25°C) for 3 minutes, and placed inside a centrifugal dryer to obtain finished products (Samples 1 to 5) by effecting centrifugal drying under a revolution rate of 500 rpm for 6 minutes at a temperature of 70°C.

### B. Process for producing Sample 6 (Comparative Example)

To the magnet test pieces obtained through process steps similar to the process step 1 and process step 2 of the process A above, which have formed on the surface thereof a Ni electroplated film provided as a first layer and a Cu electroplated film provided as a second layer, a Ni-P alloy electroless plating film provided as a third layer was formed on the surface of the Cu electroplated film provided as the second layer by using, as a Ni-P alloy electroless plating bath, a plating bath containing 20 g/L of nickel sulfate hexahydrate, 15 g/L of sodium hypophosphate and appropriate amounts of a stabilizing agent, a complexing agent and the like, with the pH adjusted to 6.0 by using ammonia water or sulfuric acid, at a liquid temperature of 90°C, and by carrying out the process by rotating the barrel at a revolution rate of 4 rpm. Thereafter, the magnet test pieces having formed on the surface thereof a three-layered laminated film was thoroughly rinsed by immersing the barrel in purified water (25°C). Then, the magnet test pieces were taken out from the barrel jig, subjected to ultrasonic rinsing using purified water (25°C) for 3 minutes, and placed inside a centrifugal dryer to obtain a finished product (Sample 6) by effecting centrifugal drying under a revolution rate of 500 rpm for 6 minutes at a temperature of 70°C.

### C. Process for producing Sample 7 (Comparative Example)

To the magnet test pieces obtained through process steps similar to the process step 1 and process step 2 of the process A above, which have formed on the surface thereof a Ni electroplated film provided as a first layer and a Cu electroplated film provided as a second layer, a Ni electroplated film provided as a third layer was formed on the surface of the Cu electroplated film provided as the second layer by using, as a Ni electroplating bath, a plating bath containing 240 g/L of nickel sulfate hexahydrate, 45 g/L of nickel chloride hexahydrate, 30 g/L of boric acid, 0.2 g/L of 2-butyne-1, 4-diol and 1 g/L of saccharin, with the pH adjusted to 4.2 by using nickel carbonate, at a liquid temperature of 50°C, while rotating the barrel at a revolution rate of 5 rpm and applying current at a current density of 0.2 A/dm². Thereafter, the magnet test pieces having formed on the surface thereof a three-layered laminated film was thoroughly rinsed by immersing the barrel in purified water (25°C). Then, the magnet test pieces were taken out from the barrel jig, subjected to ultrasonic rinsing using purified water (25°C) for 3 minutes, and placed inside a centrifugal dryer to obtain a finished product (Sample 7) by effecting centrifugal drying under a revolution rate of 500 rpm for 6 minutes at a temperature of 70°C.

The film thicknesses of the Samples 1 to 7 produced in the processes A to C above are given in Table 1. Table 2 shows the Vicker's harness values (Hv) of the Cu electroplated film provided as the second layer and the film provided as the third layer, together with the ratio of the both (the Vicker's hardness of the film provided as the third layer with respect to the Vicker's hardness of the Cu electroplated film provided as the second layer taken as 1). Here, Vicker's hardness value was measured according to the measuring method of the Micro vicker's hardness; i.e., by indenting the surface of the film using an indenter 5 g in weight for time duration of 10 seconds, by measuring the size of the indentation mark and by calculating the value by conversion of the diagonal length of the rhombic shape.

**[Table 1]**

| | Film thickness of the first layer, Ni film (µm) | Film thickness of the second layer, Cu film (µm) | Film for the third layer | | Total film thickness (µm) |
|---|---|---|---|---|---|
| | | | Type (P content) | Film thickness (µm) | |
| Sample 1 | 5 | 15 | Electroless Ni-P (11 wt%) | 5 | 25 |
| Sample 2 | 5 | 10 | Electroless Ni-P (11 wt%) | 5 | 20 |
| Sample 3 | 5 | 7 | Electroless Ni-P (11wt%) | 5 | 17 |
| Sample 4 | 5 | 5 | Electroless Ni-P (11 wt%) | 5 | 15 |
| Sample 5 | 3 | 3 | Electroless Ni-P (11 wt%) | 4 | 10 |
| Sample 6 | 5 | 10 | Electroless Ni-P (3 wt%) | 5 | 20 |
| Sample 7 | 5 | 10 | Electroplated Ni | 5 | 20 |

| | | | | | |
|---|---|---|---|---|---|
| * The film thickness was varied by changing the time duration of plating. | | | | | |

**[Table 2]**

| | Hv of the second layer, Cu film | Hv of the film for the third layer | Hv ratio |
|---|---|---|---|
| Sample 1 | 156 | 543 | 3.5 |
| Sample 2 | 163 | 545 | 3.3 |
| Sample 3 | 167 | 576 | 3.5 |
| Sample 4 | 172 | 580 | 3.4 |
| Sample 5 | 175 | 583 | 3.3 |
| Sample 6 | 163 | 781 | 4.8 |
| Sample 7 | 162 | 352 | 2.2 |

| | | | |
|---|---|---|---|
| * The Hv of the Cu film provided as the second layer was measured at the point the process step 2 of the sample production process was completed. | | | |

### Evaluation 1:

Samples 1, 3, 4, 6, and 7 were subjected to motor acceleration-deceleration durability test, in which the motor is rotated at a maximum revolution rate of 6000 rpm or higher. As a result, Sample 1 was found that the Ni-P alloy electroless plating film was abraded for about 2 µm. Sample 3 was found that the Ni-P alloy electroless plating film was abraded for about 5 µm. Sample 4 was found that all of the Ni-P alloy electroless plating film was abraded away, and that the Cu electroplated film was abraded for about 3 µm (the abrasion loss in total is about 8 µm). Little abrasion was found on the Ni-P alloy electroless plating film of Sample 6, however, cracks were generated between the Cu electroplated film and the Ni-P alloy electroless plating film. In case of Sample 7, scratches were generated on the surface of the Ni electroplated film at 50th cycle, which made further test unfeasible.
From the results above, it has been found that it is not possible to impart excellent corrosion resistance, abrasion resistance, and impact resistance to the magnet in case the outermost film provided as the third layer has a too high or too low Vicker's hardness.

### Evaluation 2:

Samples 2, 3, 4, and 5 were subjected to severe impact fatigue test; i.e., energy of 1 × 10⁻⁴ to 3 × 10⁻⁴ J was applied repeatedly for 10⁸ to 10⁹ times to an arbitrarily selected two sites of the surface of the sample. As a result, it was found that neither fractures nor chippings generated on the magnet test piece of any samples. Sample 2 was found that all of the Ni-P alloy electroless plating film was abraded away, and that the Cu electroplated film was abraded for about 8 µm (the abrasion loss in total is about 13 µm). Sample 3 was found to lose all of the Ni-P alloy electroless plating film and the Cu electroplated film by abrasion, and the Ni electroplated film was abraded for about 3 µm (the abrasion loss in total is about 15 µm). In case of Samples 4 and 5, all of the films were abraded away, and a part of the magnet test piece was also abraded (the abrasion loss in total is about 27 µm).
From the results above, it has been found that, in case the film thickness of the Cu electroplated film provided as the second layer is 7 µm or more, the abrasion loss results lower than the amount expected from the difference in the film thickness as compared to the case the film thickness is 5 µm. The fact that abrasion resistance can be considerably increased by controlling the film thickness of the film provided as the base layer of the Ni-P alloy electroless plating film provided as the third layer is an effect unexpected from the known understandings.

### Evaluation 3: Corrosion resistance test

All of the Samples 1 to 7 were subjected to corrosion resistance test, in which the samples were left in a thermo-hygrostat under conditions of 50°C and 95% humidity for 72 hours. No rust generated on any of the samples, from which excellent corrosion resistance of the samples was confirmed.

### Industrial Applicability

The present invention has industrial applicability on the point that it provides a process for producing a permanent magnet for use in an automotive IPM motor, which excels in all of corrosion resistance, abrasion resistance, and impact resistance.

## Claims

1. A process for producing a permanent magnet which is used by inserting it into the slot inside a rotor yoke of an automotive IPM motor, **characterized by** a production process comprising forming on the surface of an R-Fe-B based permanent magnet a 3 to 15 µm thick Ni film as a first layer by electroplating method, followed by a 3 to 15 µm thick Cu or Sn film as a second layer by electroplating method, and a 4 to 7 µm thick Ni-P alloy film as a third layer by electroless plating method, provided that the third layer has a Vicker's hardness of 2.5 to 4.5 with respect to the Vicker's hardness of the Cu or Sn electroplated film provided as the second layer taken as 1.

2. The production process as claimed in Claim 1, wherein the film provided as the first layer is formed by using a Ni-plating bath, the pH of which is adjusted to a range of 6.0 to 8.0.

3. The production process as claimed in Claim 1 or 2, wherein the Vicker's hardness value of the film provided as the third layer is in a range of 400 to 700.

4. The production process as claimed in one of Claims 1 to 3, wherein the film provided as the third layer contains 5 to 12 % by weight of P.

5. The production process as claimed in one of Claims 1 to 4, wherein the total film thickness of the films provided as the first layer to the third layer is in a range of 15 to 25 µm.

6. A permanent magnet which is used by inserting it into the slot inside a rotor yoke of an automotive IPM motor, **characterized by** laminating a 3 to 15 µm thick Cu or Sn electroplated film on the surface of an R-Fe-B based permanent magnet with a 3 to 15 µm thick Ni electroplated film interposed, and a 4 to 7 µm thick Ni-P alloy electroless plating film having a Vicker's hardness of 2.5 to 4.5 with respect to the Vicker's hardness of the Cu or Sn electroplated film taken as 1.
